# EUROPÄISCHE PATENTANMELDUNG

(11) **EP 2 960 003 A1**
(43) Veröffentlichungstag der Anmeldung: **30.12.2015**
(21) Anmeldenummer: 15172823.5
(22) Anmeldetag: 14.03.2013
(51) Int. Cl.: B23K 11/30

(54) **VORRICHTUNG ZUM ENTFERNEN VON ELEKTRODENKAPPEN AN SCHWEISSROBOTERN**

(30) Priorität: 15.03.2012 DE 102012005259
(62) Teilanmeldung aus: 13159105.9
(71) Anmelder: Lutz, Peter, 81104 Bratislava (SK)
(72) Erfinder: Lutz, Peter, 81104 Bratislava (SK)
(74) Vertreter: Jabbusch, Matthias

(57) **Zusammenfassung**

Die Erfindung betrifft eine kombinierte Vorrichtung zum Entfernen von Elektrodenkappen in Schweißrobotern.

Der Erfindung liegt die Aufgabe zugrunde für eine solche Vorrichtung eine Bauart aufzufinden, die geringe Außenabmessungen aufweist und die es ermöglicht, dass das Entfernen von Elektrodenkappen energiesparend und schnell durchgeführt werden kann.

Erfindungsgemäß ist die Vorrichtung so ausgestaltet, dass eine Abzieheinrichtung in zwei im Gehäuse einander gegenüberliegende und zueinander koaxial ausgerichtete Teil-Abzieheinrichtungen unterteilt ist und dass im Gehäuse zwischen den Teil-Abzieheinrichtungen ein Elektrodenkappen-Abführkanal angeordnet ist.

## Beschreibung

Die Erfindung betrifft eine Vorrichtung zum Abziehen von an den Zangenenden eines Schweißroboters angeordneten Elektrodenkappen.

Schweißroboter haben einen computergesteuerten Roboterarm mit einer Schweißzange, die an den einander gegenüberliegenden Zangenenden je eine Elektrodenkappen-Aufnahme hat, auf welche die Elektrodenkappen aufgesteckt werden. Zur selbstständigen Fixierung der Elektrodenkappen sind die Aufnahmen der Schweißzangen üblicherweise zu ihrem freien Ende hin verjüngt ausgebildet, so dass eine aufgesetzte Elektrodenkappe unter federnder Wirkung durch die Presskraft der Schweißzange auf der Aufnahme automatisch fixiert wird. Es sind Vorrichtungen zum Auswechseln der Elektrodenkappen bekannt, die auch als Kappenwechsler bezeichnet werden.

Bei dem Einsatz von Kappenwechslern in Produktionslinien, vornehmlich in der Automobilproduktion, ergeben sich häufig sehr beengte Installationsmöglichkeiten. Es ist daher erforderlich, kompakte Maschinen mit kleinsten Abmaßen und möglichst wenig Störkanten einzusetzen. Die Roboterschweißzange soll möglichst kurze Wege zu einem Kappenwechsler und Kappenfräser zurücklegen. Ebenso sollen alle Operationspunkte so dicht beieinander, möglichst in derselben Ebene liegen, damit die Taktzeit/Zykluszeit verkürzt werden kann. Bisherige Maschinenkonzepte weisen zwei Wechselköpfe auf, um die Elektrodenkappe der rechten, bzw. gegenläufig drehend, der linken Zangenhälfte abziehen zu können. Hierzu bedarf es jeweils einer Ausgangsposition der Zange für den einen Abziehkopf, sodann für den zweiten Abziehkopf eine andere Position. Häufig müssen hierfür erhebliche Verfahrwege in Kauf genommen werden, die Zeit kosten. Bei Einsatz nur eines Abziehkopfes müsste die Zange jeweils um 180° gedreht werden, was nicht gewünscht bzw. akzeptiert ist.

Der Erfindung liegt die Aufgabe zugrunde, eine Bauart aufzufinden, welche die vorgenannten Nachteile des vorgenannten Standes der Technik vermeidet.

Diese Aufgabe ist gelöst durch die Vorrichtung nach Patentanspruch 1. Weitere erfinderische Merkmale ergeben sich aus den Unteransprüchen.

Die vorliegende Erfindung löst die Problematik zunächst durch eine kompakte Bauart, die es ermöglicht, die beiden Abziehköpfe koaxial zueinander anordnen zu können. Dadurch wird Platz gespart, das Gerät wird kompakter, hat weniger Störkanten, die Verfahrwege der Zange werden kürzer und eine Ebene entfällt, d. h., die Zangenachse wird nur in einer Ebene versetzt, anstatt nach rechts bzw. links und nach oben bzw. unten. Das ergibt eine Zeitersparnis. Durch diese Anordnung der Abziehköpfe wird vorteilhaft auch ein Stauraum für die abgezogenen Elektrodenkappen gewonnen. Für bewegliche Kombigeräte kann der Stauraum geschlossen werden und erst an der Docking Station geöffnet und entleert werden.

Die drei Spannbacken eines Abziehkopfes nach der Erfindung sind durch ihre exzentrische Bauart so ausgelegt, dass sie eine Elektrodenkappe selbsttätig greifen, nachdem die Drehung beginnt. Noch während der Drehung wird abgezogen und der Zangenschaft (Pinole) fährt aus. Die Elektrode verbleibt in den Spannbacken und wird erst mit dem nächsten Abziehprozess aus den Spannbacken herausgeschoben.

Dasselbe geschieht bei dem Abziehen der Gegenelektrodenkappe auf der anderen Zangenhälfte. Durch ein Zwischenzahnrad wird hier die Drehrichtung umgekehrt.

Die Elektrodenkappen, die aus den oberen bzw. unteren Spannbacken herausgedrückt werden, werden in dem Raum zwischen den Abziehbacken gehalten und mittels eines Elevators zur Ausgangsöffnung befördert.

Ein Elevator befindet sich auf der Innenseite der Abzieheinrichtung und befördert durch Rotation und entsprechend angeordnete Rippen die Elektrodenkappen weiter in Richtung zum Abführkanal, so dass auch in horizontaler Einbaulage der Vorrichtung die Elektrodenkappen durch Fliehkraft und durch Gefälle (Schwerkraft) die Elektroden abgeführt werden. Ziel dieser Erfindung ist es, völlig ohne Absaugung Kappen abzuführen. Bisher geschieht das über Druckluft verbunden mit einer Unterdruckdüse/Venturidüse. Bei den übrigen weiteren zwei Einbaulagen (vertikal und Stirnseite nach oben) genügt im Wesentlichen die Schwerkraft.

Durch die Getriebeausbildung mit Schneckenwelle und Schneckenrad sowie entsprechend ausgelegte Stirnräder wird die Drehzahl eines Elektromotors von z. B. 1400 U/min auf ca. 20 U/min an den Abziehköpfen reduziert, was die Elektrodenschäfte schont. Die Drehzahl an dem Fräskopf der Fräseinrichtung verbleibt gleichwohl je nach Auslegung von Kegel-Tellerrad und Kegelritzel, bei gewünschten 400-1200 U/min. Bei einer Anordnung über Stirnräder wären mehrere Untersetzungsstufen erforderlich. Die Getriebeanordnung befindet sich in der einen Gehäuseschale und ist somit nach Abnahme einer Abdeckung leicht zugänglich.

Die Ausbildung einer integrierten Fräseinrichtung ermöglicht ebenfalls eine kompakte Bauart. Bisher sind Fräsgeräte so ausgelegt, dass die beiden Halbschalen der Maschine zwischen 10 und 25 mm Bauhöhe am Fräskopf aufweisen. Dies erfordert für die Ausblasung/Absaugung von Spänen zusätzliche Anbauten, die mit ihren Zuleitungen erhebliche Störkanten bilden. Die Erfindung löst diese Problematik durch eine entsprechend ausgelegte Bauhöhe, die im Zugangsbereich 20 mm, in der umlaufenden Bauhöhe bis 150 mm aufweist. Durch diese Bauart kann eine Ausblasung mit Druckluftzuleitungen integriert werden ohne irgendwelche äußeren Störkanten. Die erfindungsgemäße Bauart ermöglicht auch durch eine Abdeckung aus transparenter Matte oder Bürstenleiste, die beim Fräsen entstehenden Späne zu sammeln und gezielt abzuführen, ohne eine separate Spanabführung aufsetzen zu müssen. Durch diese Bauart kann auch außerhalb des Spanraumes beidseitig eine Führungsplatte befestigt werden, die bei labilen Zangen das Aufschaukeln während des Fräsens verhindert. Bei bisherigen Maschinen bedarf es entweder eines zusätzlichen Aufbaues, der dann die Verwendung einer Absaugungsvorrichtung verhindert oder entsprechend raumgreift. Wird eine Führungsplatte nahe am Fräskopf montiert, können Späne nicht austreten und es kommt zu Verstopfungen.

Ein Ausführungsbeispiel der Erfindung ist in der Zeichnung dargestellt. Es zeigen:
- Fig. 1:: eine perspektivische Vorderansicht einer erfindungsgemäßen Vorrichtung;
- Fig. 2:: eine perspektivische Rückansicht der Vorrichtung;
- Fig. 3:: perspektivische Ansichten der beiden Gehäuseschalen der Vorrichtung ohne Einbauten;
- Fig. 4:: eine Seitenansicht der komplettierten vorderen Gehäuseschale;
- Fig. 5:: eine schematische Ansicht der Getriebeausbildung der Vorrichtung;
- Fig. 6:: einen Schnitt durch die Abzieheinrichtungen und den Abführkanal für die abgezogenen Elektrodenkappen;
- Fig. 7:: eine vergrößerte schematische Ansicht eines der Tellerräder der Abzieheinrichtungen;
- Fig. 8:: einen vergrößerten und schematischen Schnitt durch die Fräseinrichtung mit ihrem Antrieb.

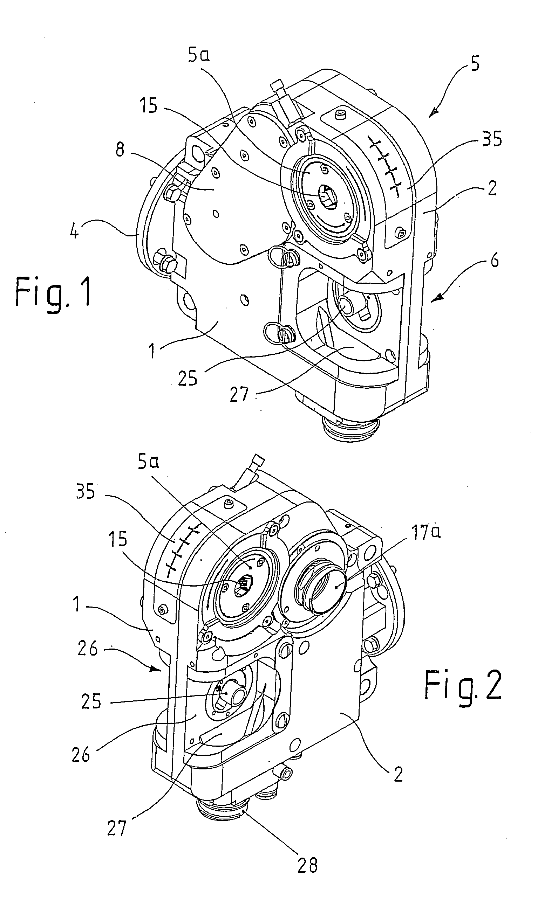

Wie aus den Figuren 1 bis 3 ersichtlich, ist die Vorrichtung auf der Mittellängsebene in eine vordere Gehäuseschale 1 und in eine rückwärtige Gehäuseschale 2 unterteilt. Ein Elektromotor 3 wird an einen Flansch 4 der Vorrichtung angesetzt. Je eine in die Gehäuseschalen 1 und 2 integrierte Abzieheinrichtung 5 hat einen Deckel 5a mit einer Mittenöffnung, der die Fräsköpfe 25 der Abzieheinrichtungen nach außen abdeckt. In den meisten Einsatzfällen ist die Vorrichtung liegend ausgerichtet, wobei dann die Achsen der Abzieheinrichtungen und der Fräseinrichtung lotrecht ausgerichtet sind.

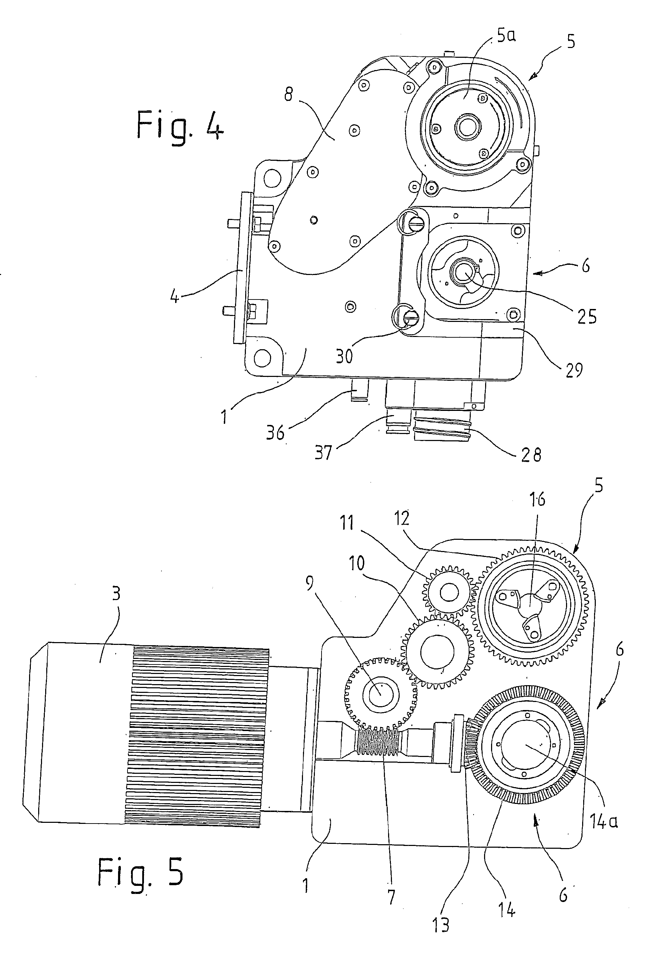

Fig. 5 zeigt die Getriebeanordnung im Innenraum der vorderen Gehäuseschale 1. Der Elektromotor 4 treibt koaxial eine Schneckenwelle 7. Die Schneckenwelle treibt Stirnräder 9, 10 und 11 und schließlich ein Stirnrad 12 der in der vorderen Gehäuseschale 1 liegenden Abzieheinrichtung 5. Das Stirnrad 11 ist über eine nicht dargestellte Welle mit einem gleichen Stirnrad in der rückwärtigen Gehäuseschale 2 verbunden, das mit dem Tellerrad der in der rückwärtigen Gehäuseschale 2 angeordneten zweiten Abzieheinrichtung 5 im Eingriff steht. Damit laufen die Stirnräder 12 in den beiden Gehäuseschalen in einander entgegengesetzte Drehrichtungen. An dem freien Ende der Schneckenwelle 7 ist ein Kegelrad-Ritzel 13 angeordnet, das mit einem großen Kegel-Tellerrad 14 der Fräseinrichtung 6 im Eingriff steht.

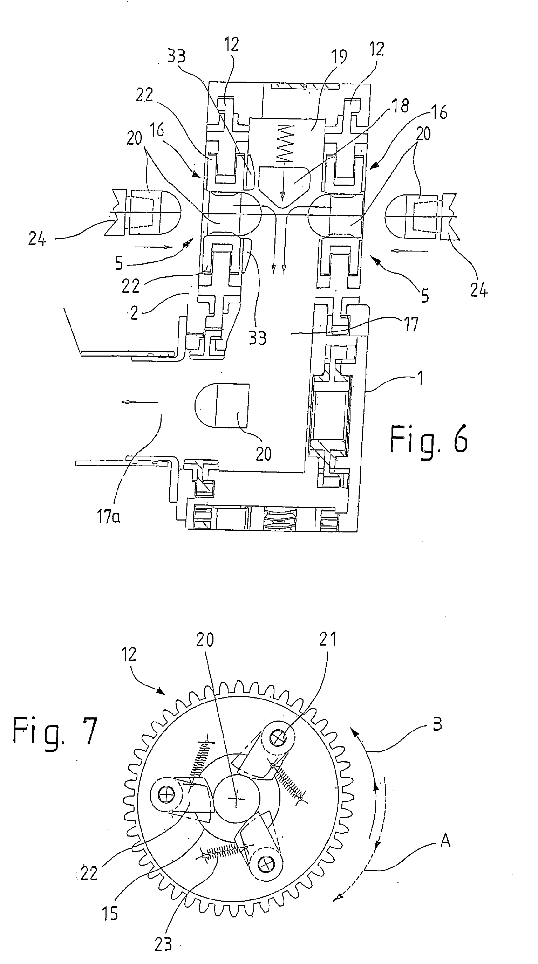

Wie insbesondere die Fig. 6 zeigt, hat jede Abzieheinrichtung 5 einen Abziehkopf 16, die beide in den Gehäuseschalen 1 und 2 koaxial so angeordnet sind, dass sie sich mit einem Abstand voneinander gegenüberliegen. Damit kann die Schweißzange des Roboters nach gleichzeitiger Ausrichtung auf die Abziehköpfe mit einer Seitwärtsbewegung die eine Elektrodenkappe zum Abziehen von der Elektrodenkappen-Aufnahme 24 in den einen Abziehkopf 16 einführen und danach mit einer entgegen gerichteten Seitwärtsbewegung die andere Elektrodenkappe zum Abziehen in den anderen Abziehkopf 16 einführen. Zwischen den Abziehköpfen liegt ein Kappen-Abführkanal 17, der einen in der Gehäuseschale 2 liegenden Kappenaustritt 17a hat, an den ein nicht dargestellter Abführschlauch angeschlossen wird. Im Bereich der einander gegenüberliegenden Abziehköpfe 16 befindet sich in der Mitte des Abführkanals 17 ein mit einer Druckfeder 19 belasteter einseitig schwenkbar gelagerter Abstoßbügel 18, der keilförmig ausgebildet ist und der unter der Federwirkung vom geschlossenen Kanalende her bis gegen die gemeinsame Achse der beiden Abziehköpfe 16 vorsteht. Bei einer vereinfachten Ausführung kann dieser Abstoßbügel 18 durch einen federbelasteten Stift ersetzt sein, der entsprechend gegen die gemeinsame Achse der beiden Abziehköpfe 16 vorsteht.

Fig. 7 zeigt vergrößert eine schematische Ansicht den wesentlichen Aufbau der beiden Stirnräder 12 der Abzieheinrichtungen 5. Eine in die zentrale Öffnung 15 des Stirnrades 12 eingeschobene Elektrodenkappe ist mit 20 bezeichnet. Auf einem Kreis um die Achse des Tellerrades sind auf beidseitig vorstehenden Zapfen 21 drei Spannbacken 22 in gleichen Winkelabständen voneinander schwenkbar gelagert. Jede Spannbacke 22 ist mit einer Zugfeder 23 in Richtung auf die Elektrodenkappe 20 belastet. Schwenkt das Tellerrad 12 im Uhrzeigersinn (Pfeil A), so ziehen die Zugfedern 23 die Spannbacken 22 gegen die Elektrodenkappe 20, die damit zunehmend fester erfasst wird und dann von der Schweißzange abgezogen werden kann. Dreht das Tellerrad 12 bei Umschalten des Motors gegen den Uhrzeigersinn (Pfeil B), so öffnen sich die Spannbacken 22, so dass eine weitere Elektrodenkappe eingesetzt werden kann. Durch den Kontakt der Kappen mit leicht geöffneten Spannbacken rutschen diese mit weniger Druck auf der Schweißzange in die Abzieheinrichtung rein. Dies ist von besonderem Vorteil bei zylindrischen Kappen.

Die Elektrodenkappe wird bei ruhendem Getriebe in die Abzieheinrichtung 5 eingeschoben. Dann startet der Motor 3 und nach ein bis zwei Umdrehungen wird gestoppt. Dabei wird die Elektrodenkappe in ihrem Sitz gelockert und der Schweißroboter fährt die Schweißzange mit der Elektrodenkappen-Aufnahme 24 aus der Elektrodenkappe raus. Die abgezogene Elektrodenkappe verbleibt in der Abzieheinrichtung und wird bei einem nachfolgenden Abziehvorgang durch die nachfolgende Kappe in den Abführkanal 17 geschoben. Beim Einschieben stößt die Kappe an den gefederten schräg geformten Abstoßbügel 18, der die Kappe Richtung Kanalausgang umlenkt. Eine Elevatorscheibe schleudert die vom Abstoßbügel weggedrückte Kappe in Richtung Kanalausgang. Diese Elevatorscheibe ist an der Innenseite eines der beiden Stirnräder 12 angeordnet. Sie hat zwei in den Abführkanal 17 hinein hochstehende Elevatorflügel 33 (Fig. 6). Die Elevatorflügel 33 drehen sich bei jedem Abziehvorgang mit und schleudern die abgezogenen Kappen nach außen in den Abführkanal 17, wodurch ein Verbleiben der Kappen am Abziehkopf verhindert wird. Dies ist besonders vorteilhaft bei horizontaler Lage der Abzieheinrichtung. Bei vertikaler Lage der Abzieheinrichtung fallen die Kappen immer nach unten in den Abführkanal 17.

Die beiden Abziehköpfe 16 drehen zueinander gegenläufig. Der eine Abzieher hat eine rechtsdrehende Drehrichtung, der andere Abzieher hat auch eine rechtsdrehende Drehrichtung. Dadurch werden die möglicherweise geschraubten Elektrodenkappen-Aufnahmen 24 der Schweißzange nicht gelockert.

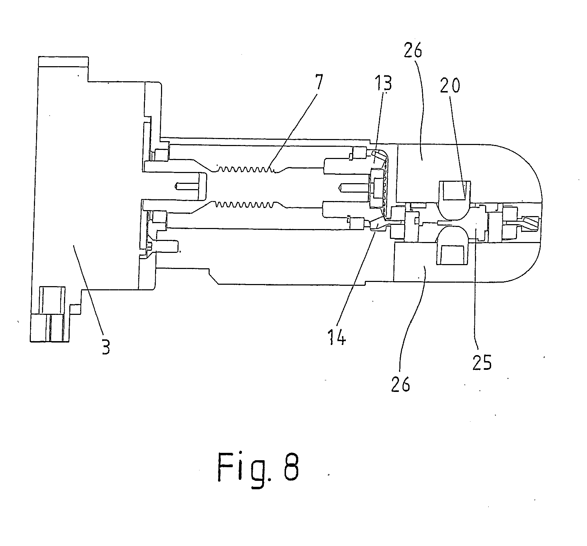

Fig. 8 zeigt die Fräseinrichtung 6 in einer vereinfachten Schnittansicht. Das Kegelrad-Ritzel 13 steht in Eingriff mit dem Kegel-Tellerrad 14, mit dem der Fräskopf 25 antriebsmäßig verbunden ist. Zu beiden Seiten des Fräskopfes 25 befinden sich Späne-Aufnahme-Kammern 26, die in einen gemeinsamen Späne-Abführkanal 27 münden, der am freien Ende einen Anschlussstutzen 28 hat, der über einen Abführschlauch mit einer Absaugeinrichtung verbunden werden kann. Jeder Aufnahmekammer 26 ist eine nicht dargestellte Pressluftdüse zugeordnet, welche die Späne in den Abführkanal 27 drückt. Zwei Pressluftanschlüsse sind mit 36 und 37 bezeichnet (Fig. 4).

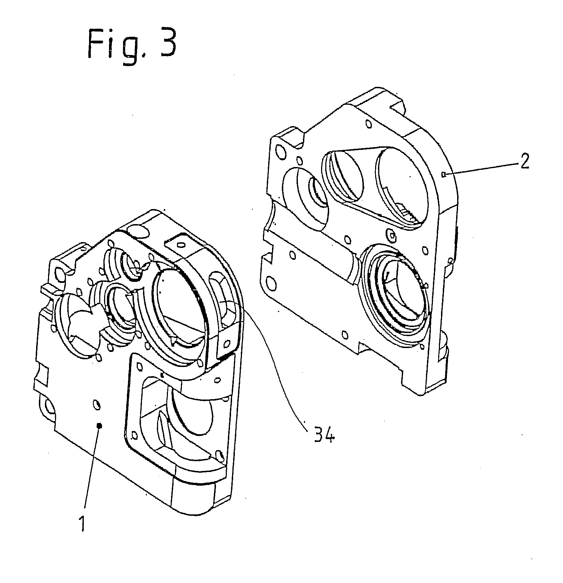

Nach beiden Seiten hin ist die Fräseinrichtung 6 mit einer transparenten, elastischen Folienkappe 29 abdeckbar, die Elektrodenkappen-Durchführöffnungen hat und die mit Schrauben 30 befestigt wird. In der vorderen Gehäuseschale 1 ist im Bereich der Abzieheinrichtung 5 ein Sichtfenster 34 angeordnet, das mit einer transparenten Abdeckkappe 35 abgedeckt ist (Fig. 3 und 2).

## Patentansprüche

1. Vorrichtung zum Abziehen von an den Zangenenden eines Schweißroboters angeordneten Elektrodenkappen,
**dadurch gekennzeichnet,**
**dass** eine Abzieheinrichtung (5) in zwei im Gehäuse einander gegenüberliegende und zueinander koaxial ausgerichtete Teil-Abzieheinrichtungen unterteilt ist und dass im Gehäuse zwischen den Teil-Abzieheinrichtungen ein Elektrodenkappen-Abführkanal (17) angeordnet ist.

2. Vorrichtung nach Anspruch 1, **dadurch gekennzeichnet, dass** jedes Stirnrad (12) der Teil-Abzieheinrichtungen eine zentrale Öffnung (15) zum Einschieben einer Elektrodenkappe (20) hat, dass auf einem Kreis um die Achse jedes Stirnrades (12) drei aus dem Tellerrad beidseitig vorstehende Lagerzapfen (21) angeordnet sind, auf denen je eine in die zentrale Öffnung vorstehende Spannbacke (22) gelagert ist, die unter der Wirkung einer Zugfeder (23) gegen die Öffnung (15) vorschwenkbar ist.

3. Vorrichtung nach Anspruch 2, **dadurch gekennzeichnet, dass** die zur zentralen Öffnung (15) vorstehenden freien Ränder der Spannbacken (22) bogenförmig ausgebildet sind derart, dass die federbelastete Anlage der Spannbacken an eine in die zentrale Öffnung eingeschobene Elektrodenkappe (20) in der einen Drehrichtung des Stirnrades (12) zunehmend verstärkt wird und in der entgegengesetzten Richtung des Stirnrades (12) aufgehoben wird.

4. Vorrichtung nach einem der Ansprüche 1 bis 3, **dadurch gekennzeichnet, dass** im geschlossenen Ende des Kappen-Abführkanals (15) ein mit einer Druckfeder (19) belastetes, vorzugsweise als einseitig schwenkbar gelagerter Abstoßbügel (18) ausgebildetes Kappen-Abstoßelement angeordnet ist, das in Ruhestellung gegen die gemeinsame Achse der Abziehköpfe (16) der Abzieheinrichtungen (5) vorsteht.

5. Vorrichtung nach einem der Ansprüche 1 bis 4, **dadurch gekennzeichnet, dass** an wenigstens einem der beiden Stirnräder (12) innen eine Elevatorscheibe koaxial und parallel zum Stirnrad angeordnet ist, die mindestens einen in den Abführkanal (17) vorstehenden Elevatorflügel (33) hat.
